# EUROPEAN PATENT APPLICATION

(11) **EP 3 754 375 A1**
(43) Date of publication of application: **23.12.2020**
(21) Application number: 18906268.0
(22) Date of filing: 13.02.2018
(51) Int. Cl.: G01S 17/08

(54) **RANGING SYSTEM, AUTOMATION DEVICE AND RANGING METHOD**

(71) Applicant: SZ DJI Technology Co., Ltd., Shenzhen, Guangdong 518057 (CN)
(72) Inventor: LIU, Xiang, Shenzhen, Guangdong 518057 (CN); HONG, Xiaoping, Shenzhen, Guangdong 518057 (CN); HUANG, Huai, Shenzhen, Guangdong 518057 (CN)
(74) Representative: Goddar, Heinz J.
(86) International application number: PCT/CN2018/076656
(87) International publication number: WO 2019/157632

(57) **Abstract**

A ranging system, an automated equipment and a ranging method. The ranging system includes a first transmitter configured to emit a first optical signal to an object to be measured; a receiver corresponding to the first transmitter, configured to receive a reflected signal corresponding to the first optical signal; a second transmitter configured to emit a second optical signal to the object to be measured; a receiver corresponding to the second transmitter, configured to receive a reflected signal corresponding to the first optical signal; a controller configured to control the first transmitter to emit the first optical signal and control the second transmitter to emit the second optical signal; and a measuring device configured to acquire indication information based on the received reflected signal corresponding to the first optical signal and/or the reflected signal corresponding to the second optical signal. The ranging system includes two different transmitters. Compared with a single transmitter, the probability of the two transmitters simultaneously generating the zero-level reflection phenomenon is relatively low, which can improve the measurement accuracy of the ranging system to a certain extent.

## Description

### CROSS-REFERENCE TO RELATED APPLICATION

This application is a continuation of International Application No. PCT/CN2018/076656, filed on February 13, 2018, the entire content of which is incorporated herein by reference.

### TECHNICAL FIELD

The present disclosure relates to the field of ranging and, more specifically, to a ranging system, an automated equipment, and a ranging method.

### BACKGROUND

Ranging systems are widely used in various automated equipment, such as unmanned aerial vehicles (UAVs), unmanned vehicles, etc.

A ranging system generally includes a transmitter and a receiver. When there is a need to acquire the distance of an object being measured, the transmitter can be used to transmit an optical signal to the object being measured, and the receiver can be used to receive the reflected signal of the optical signal. Subsequently, the distance of the object being measured can be measured based on the time difference (or phase difference) between the transmission time of the optical signal and the reception time (or the return time) of the reflected signal corresponding to the optical signal. In conventional technology, the ranging system is prone to the zero-level reflection phenomenon, which can result in inaccurate measurement results.

### SUMMARY

The present disclosure provides a ranging system, an automated equipment and a ranging method, which can reduce the impact of the zero-level reflection problem of the ranging system on the measurement results to a certain extent, and improve the measurement accuracy.

A first aspect of the present disclosure provides a ranging system including a first transmitter configured to emit a first optical signal to an object to be measured; a receiver corresponding to the first transmitter, configured to receive a reflected signal corresponding to the first optical signal; a second transmitter configured to emit a second optical signal to the object to be measured; a receiver corresponding to the second transmitter, configured to receive a reflected signal corresponding to the first optical signal; a controller configured to control the first transmitter to emit the first optical signal and control the second transmitter to emit the second optical signal; and a measuring device configured to acquire indication information based on the received reflected signal corresponding to the first optical signal and/or the reflected signal corresponding to the second optical signal, the indication information is used to indicate or determine a distance of the object to be measured.

A second aspect of the present disclosure provides an automated equipment including a housing; and the ranging system described in the first aspect disposed in the housing.

A third aspect of the present disclosure provides a ranging method including a controller controlling a first transmitter to emit a first optical signal to an object to be measured, and controlling a second transmitter to emit a second optical signal to the object to be measured; a receiver corresponding to the first transmitter receiving a reflected signal corresponding to the first optical signal; a receiver corresponding to the second transmitter receiving a reflected signal corresponding to the second optical signal; and a measuring device acquiring indication information based on the received reflected signal corresponding to the first optical signal and/or the reflected signal corresponding to the second optical signal, the indication information is used to indicate or determine a distance of the object to be measured.

The ranging system provided in the present disclosure includes two transmitters. Since different transmitters have different positions in the ranging system, the surrounding environments of the two may be correspondingly different. The probability of simultaneous occurrence of the zero-level reflection phenomenon by two transmitters in different environments is lower than the probability of the zero-level reflection phenomenon by a single transmitter, therefore, the ranging system provided in the present disclosure can reduce the influence of the zero-level reflection phenomenon on the measurement result to a certain extent, and improve the measurement accuracy.

### BRIEF DESCRIPTION OF THE DRAWINGS

FIG. 1 is a schematic structural diagram of a ranging system according to an embodiment of the present disclosure.
FIG. 2 is an example diagram of a specific implementation method of the ranging system shown in FIG. 1.
FIG. 3 is an example diagram of a specific implementation method of the ranging system shown in FIG. 1.
FIG. 4 is an example diagram of a time relationship between an optical signal emitted by the ranging system shown in FIG. 2 and the corresponding reflected signal.
FIG. 5 is an example structural diagram of an automated equipment according to an embodiment of the present disclosure.
FIG. 6 is a flowchart of a ranging method according to an embodiment of the present disclosure.

### DETAILED DESCRIPTION OF THE EMBODIMENTS

The type of the ranging system is not limited in the embodiments of the present disclosure. The ranging system may be a ranging system based on infrared light signals, or a ranging system based on laser signals (such as laser pulse signals). Taking a laser signal-based ranging system as an example, the ranging system described in the embodiments of the present disclosure may be a laser detection and ranging (LiDAR) system.

The ranging system in conventional technology is generally a single-transmit single-receive ranging system, that is, it only includes one transmitter and one receiver. The single-transmit single-receive ranging system is prone to the zero-level reflection phenomenon. For the ease of understanding, the zero-level reflection phenomenon will be briefly described below.

An emitting device generally includes a light source, a light source driving circuit, and one or more optical elements disposed on the light source emitting path. The optical elements disposed on the emitting device can be used to adjust the beam size and/or emission angle of the optical signal emitted by the light source. For some reason, the light signal emitted by the light source may be reflected before reaching the object being measured. For example, after the optical signal hits the optical element on its transmission path, a part of the light in the optical signal may be reflected by the optical element to form a reflected signal. The reflected signal may be erroneously received by the receiver, forming an interference signal of the reflected signal of the object. This type of reflected signal is referred to as a zero-level reflected signal in the present disclosure. If the receiver receives the zero-level reflected signal corresponding to the optical signal, it means that the zero-level reflection phenomenon has occurred on the ranging system.

If the distance between the object being measured and the ranging system is short, the receiver may quickly receive the reflected signal from the object. As such, the reception time of the object reflection signal and the zero-level reflected signal may overlap, which can be difficult for the ranging system to determine the accurate reception time of the objection reflection signal.

The above description provides a possible cause of the zero-level reflection phenomenon, that is, the optical element of the emitting device may reflect the optical signal to generate the zero-level reflection phenomenon. In fact, the zero-level reflection phenomenon may also be caused by other reasons. For example, the optical signal emitted by the transmitter may be reflected by the inner wall of the ranging system, resulting in the zero-level reflection phenomenon; or, the optical signal emitted by the transmitter may be reflected by the windshield located in front of the transmitter in the ranging system, resulting in the zero-level reflection phenomenon. The embodiments of the present disclosure may be used to improve a ranging system that generates the zero-level reflection phenomenon due to various reasons.

The technical solutions of the present disclosure will be described below with reference to the drawing.

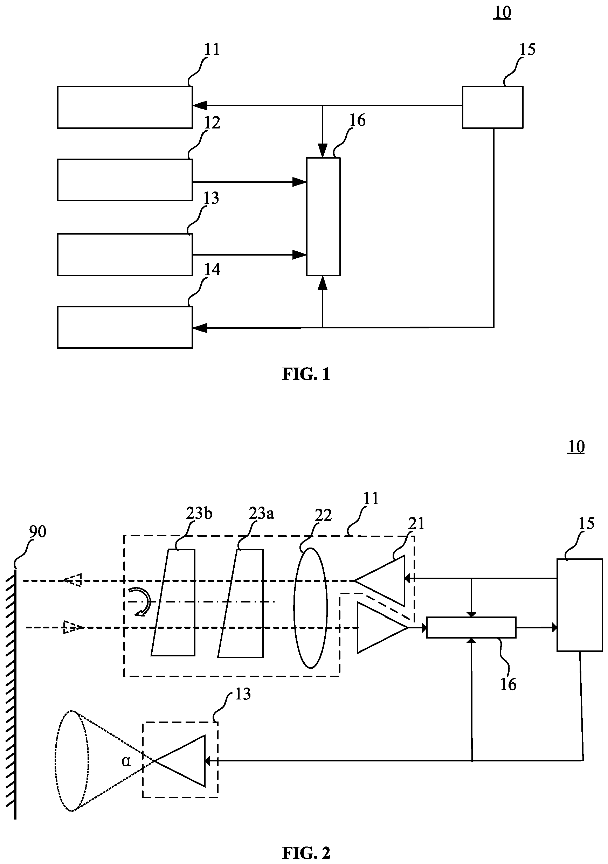

As shown in FIG. 1, an embodiment of the present disclosure provides a ranging system 10. The ranging system can be a chip system, or a ranging device with a housing. The ranging system 10 may include a first transmitter 11, a receiver 12 corresponding to the first transmitter 11, a second transmitter 13, a receiver 14 corresponding to the second transmitter 13, a controller 15, and a measuring device 16. For example, the device described above can be implemented in the form of a circuit. The parts included in the ranging system 10 will be described in detail below.

The first transmitter 11 may be used to transmit a first optical signal to an object to be measured 90. For example, the first transmitter 11 may be used to generate a first optical signal and/or adjust the angle of emission of the first optical signal. The first optical signal may be a laser signal or an infrared optical signal. Taking the laser signal as an example, the first optical signal may be a laser pulse signal. The first transmitter 11 may transmit the first optical signal under the control of the controller 15.

The first transmitter 11 may include a light source and its driving circuit. In some embodiments, the first transmitter 11 may further include an optical system for adjusting the beam size and/or emission angle of the optical signal emitted by the light source. FIG. 2 illustrates an example implementation method of the first transmitter 11. As shown in FIG. 2, the first transmitter 11 includes a light source and its driving circuit 21 (for example, the light source can be a light emitting diode or a laser diode). The first transmitter 11 may further include a scanning mechanism for adjust the emission angle of the first optical signal, such that the ranging system 10 can measure the object to be measured 90 in different angle ranges. For example, the scanning mechanism may be a rotating bi-prism 23a and 23b, or other types of optical elements that can adjust the optical path, such as a micro-electro-mechanical system (MEMS) galvanometer. In some embodiments, the first transmitter 11 may further include a lens 22, which may be used to collimate the first optical signal. The above is merely an example of the optical system included in the first transmitter 11, in fact, the first transmitter 11 may adopt other types of optical systems based on the actual measurement needs, or may adjust, add, or subtract one or more optical elements in the optical system described above based on the actual needs, which is not limited in the present disclosure.

The receiver 12 may be used to receive the reflected signal corresponding to the first optical signal. For example, the receiver 12 may be used to perform a photoelectric conversion on the reflected signal corresponding to the first optical signal. In addition, in some embodiments, the receiver 12 may also be used to adjust the receiving angle of the first optical signal. After the first optical signal hits the object to be measured 90, it may be reflected and returned by the object to be measured 90, forming a reflected signal (or an object reflected signal) corresponding to the first optical signal. In some cases, the reflected signal corresponding to the first optical signal may be referred to as an echo signal of the first optical signal.

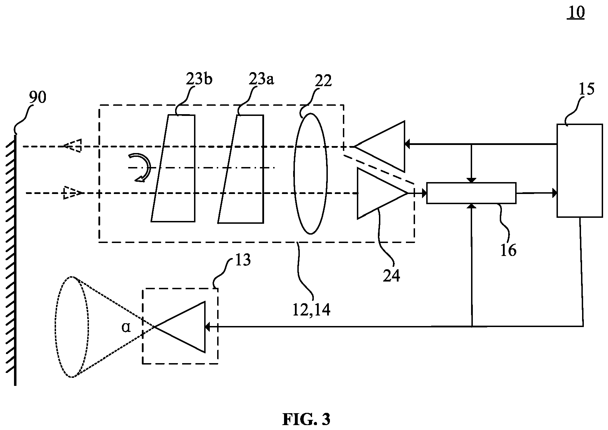

The receiver 12 may include, for example, a photoelectric conversion device, such as a photodiode, a photomultiplier tube, or an avalanche photodiode (APD). In addition, in some embodiments, the receiver 12 may further include an optical system for adjusting the beam size and/or receiving angle of the reflected signal corresponding to the first optical signal before the photoelectric conversion device receives the reflected signal corresponding to the first optical signal. Taking FIG. 3 as an example, the receiver 12 may include, for example, a scanning mechanism that can adjust the receiving angle of the reflected signal corresponding to the first optical signal, such as a rotating bi-prism 23a and 23b or MEMS. The receiver 12 may further include optical elements such as a lens 22. The lens 22 may be used to focus the reflected signal corresponding to the first optical signal. The above is merely an example of the optical system included in the receiver 12, in fact, the receiver 12 may adopt other types of optical systems based on the actual measurement needs, or may adjust, add, or subtract one or more optical elements in the optical system described above based on the actual needs, which is not limited in the present disclosure.

The second transmitter 13 may be used to transmit a second optical signal to the object to be measured 90. For example, the second transmitter 13 may be used to generate a second optical signal and/or adjust the angle of emission of the second optical signal. The second optical signal may be a laser signal or an infrared optical signal. Taking the laser signal as an example, the second optical signal may be a laser pulse signal. The second transmitter 13 may transmit the second optical signal under the control of the controller 15. The second optical signal and the first optical signal may be similar optical signals or different optical signals. As an example, the divergence angle of the second optical signal may be greater than the divergence angle of the first optical signal, such that the second optical signal may cover a larger angle range. Of course, under the requirements of safety regulations, setting a larger divergence angle for the second optical signal also means that the maximum distance that the second optical signal can measure may be shorter.

The second transmitter 13 may include a light source and its driving circuit. In some embodiments, similar to the first transmitter 11, the second transmitter 13 may further include an optical element for adjusting the beam size of the optical signal emitted by the light source. For example, the second transmitter 13 may include a beam expansion element for expanding the beam size of the light source, such as a projection lens and/or a diffraction element. The second transmitter 13 may include (or may not include) an optical element for changing the emission angle of the second optical signal. Of course, in some embodiments, the second transmitter 13 may not be provided with optical elements. That is, the second transmitter 13 may directly adjust the light emitted by the light source, and directly emit the light source to the outside of the ranging system.

The receiver 14 may be used to receive the reflected signal corresponding to the second optical signal. For example, the receiver 14 may be used to perform a photoelectric conversion on the reflected signal corresponding to the second optical signal. In addition, in some embodiments, the receiver 14 may also be used to adjust the receiving angle of the second optical signal. After the second optical signal hits the object to be measured, it may be reflected and returned by the object to be measured, forming a reflected signal (or an object reflected signal) corresponding to the second optical signal. In some cases, the reflected signal corresponding to the second optical signal may be referred to as an echo signal of the second optical signal.

The receiver 14 may include, for example, a photoelectric conversion device, such as a photodiode, a photomultiplier tube, or an avalanche photodiode (APD). In addition, in some embodiments, the receiver 14 may further include an optical system for adjusting the beam size and/or receiving angle of the reflected signal corresponding to the second optical signal before the photoelectric conversion device receives the reflected signal corresponding to the second optical signal. Taking FIG. 3 as an example, the receiver 14 may include, for example, a scanning mechanism that can adjust the receiving angle of the reflected signal corresponding to the second optical signal, such as a rotating bi-prism 23a and 23b or MEMS. The receiver 14 may further include optical elements such as a lens 22. The lens 22 may be used to focus the reflected signal corresponding to the second optical signal. The above is merely an example of the optical system included in the receiver 14, in fact, the receiver 14 may adopt other types of optical systems based on the actual measurement needs, or may adjust, add, or subtract one or more optical elements in the optical system described above based on the actual needs, which is not limited in the present disclosure.

The first transmitter 11 and the second transmitter 13 described above may be disposed at different positions of the ranging system 10 such that the first optical signal emitted by the light source in the first transmitter 11 and the second optical signal emitted by the light source in the second transmitter 13 may propagate along different propagation paths.

As described above, the controller 15 may be used to control the first transmitter 11 to emit the first optical signal, and to control the second transmitter 13 to emit the second optical signal. The embodiments of the present disclosure do not specifically limit the implementation manner of the controller 15, and it may adopt a centralized control manner or a distributed control manner. Taking the centralized control manner as an example, the controller 15 may also be called a central control device.

The measuring device 16 may be used to acquire indication information based on the reflected signal corresponding to the received first optical signal and/or the reflected signal corresponding to the received second optical signal. The indication information may be used to indicate the distance of the object to be measured 90. For example, the indication information may be the distance information of the object to be measured. Alternatively, the indication information may be used to determine the distance of the object to be measured. For example, the indication information may be the reception time of the reflected signal. The ranging system provided in the embodiments of the present disclosure includes two transmitters. Since different transmitters have different positions in the ranging system, the surrounding environments (the surrounding environment may refer to, for example, the positional relationship between the transmitter and the optical system, and the positional relationship between the transmitter and the receiver, etc.) of the two transmitters may be correspondingly different. The probability of simultaneous occurrence of the zero-level reflection phenomenon by two transmitters in different environments is lower than the probability of the zero-level reflection phenomenon by a single transmitter, therefore, the ranging system provided in the embodiments of the present disclosure can reduce the influence of the zero-level reflection phenomenon on the measurement result to a certain extent, and improve the measurement accuracy.

Alternatively, the measuring device 16 may be used to acquire indication information based on the reflected signal corresponding to the first optical signal and the reflected signal corresponding to the second optical signal. For example, when the receiver 12 receives the reflected signal corresponding to the first optical signal and the receiver 14 receives the reflected signal corresponding to the second optical signal, the measuring device 16 may measure the distance of the object to be measured 90 based on the reflected signal corresponding to the first optical signal to acquire a first distance value, and measure the distance of the object to be measured 90 based on the reflected signal corresponding to the second optical signal to acquire a second distance value. Subsequently, the measuring device 16 may calculate the weighted sum of the first distance value and the second distance value, or the measuring device 16 may calculate the difference between the first distance value and the second distance value to determine a final distance value of the object to be measured (as the indication information described above).

The specific form of the measuring device 16 is related to the ranging principle on which the ranging system 10 is based, which is not limited in the embodiments of the present disclosure. Taking the ranging system 10 measuring based on the distance of the object to be measured based on the time-of-flight (TOF) as the example, the measuring device 16 may include a time measurement circuit for measuring the reception time of the reflected signal. The reception time of the reflected signal of the first optical signal and the reception time of the reflected signal of the second optical signal may be measured by the same time measurement circuit, or may be measured by different time measurement circuits. Using the same time measurement circuit for measurement reduce the cost of the ranging system and simplify the implementation of the ranging system.

It should be noted that the receiver 12 and the receiver 14 described above are respectively used to receive the reflected signal corresponding to the first optical signal and the reflected signal corresponding to the second optical signal, but this is merely a functional division. In fact, the receiver 12 and the receiver 14 may be physically the same receiver or different receivers.

As an example, as shown in FIG. 2 or FIG. 3, the receiver 12 and the receiver 14 may be the same receiver. Setting the receiver 12 and the receiver 14 as the same receiver can reduce the cost of the ranging system and simplify the implementation of the ranging system.

In order to avoid the signal interference of the first transmitter 11 and the second transmitter 13 corresponding to the same receiver, in some embodiments, the controller 15 may be used to control the first transmitter 11 to emit the first optical signal at a first time, and control the second transmitter 13 to emit the second optical signal at a second time. The configuration of the first time and the second time may make the reception time of the reflected signal corresponding to the first optical signal and the reception time of the reflected signal corresponding to the second optical signal not to overlap with each other.

The reception time of the reflected signal corresponding to the first optical signal and the reception time of the reflected signal corresponding to the second optical signal not overlapping with each other may be that the reception times of the two may have a certain time interval, or, the waveforms of the two may not overlap.

The embodiments of the present disclosure do not specifically limit the emission order between the first transmitter 11 and the second transmitter 13. For example, the first transmitter 11 may be controlled to emit the first optical signal first, and then the second transmitter 13 may be controlled to emit the second optical signal. Alternatively, the second transmitter 13 may be controlled to emit the second optical signal first, and then the first transmitter 11 may be controlled to emit the first optical signal.

The embodiments of the present disclosure do not specifically limit the selection method of the first time and the second time. For example, the first time and the second time may be selected based on experience or experiment, or the first time and the second time may be selected based on the maximum distance that the optical signal emitted by the first transmitter 11 and/or the second transmitter 13 can measure.

As an example, the first time may be earlier than the second time, and the time interval between the first time and the second may not be less than 2L₁/c ; or, the first time may be later than the second time, and the time interval between the first time and the second may not be less than 2L₂/c, where L₁ may be the maximum distance that the first optical signal can measure (or the range of the first optical signal), L₂ may be the maximum distance that the second optical signal can measure (or the range of the first optical signal), and c may be the speed of light. The maximum distance that the first optical signal can measure and the maximum distance that the second optical signal can measure may be the same or different, which may depend on factors such as the light source type and diffraction angle of the first optical signal and the second optical signal.

In the embodiments of the present disclosure, the maximum distance that can be measured by the optical signal may separate the measurement process based on the two optical signals in time, such that the two may not cause any interference. This implementation is simple and effective.

The following describes a ranging system that is prone to the zero-level reflection phenomenon, and improves the structure of this ranging system to mitigation or even eliminate the zero-level reflection phenomenon of this ranging system.

With the development of miniaturization and integration of the ranging system, more and more manufacturers are optimizing the transceiver structure of the ranging system such that the transceiver can share one or more optical elements. The ranging system in which the optical element is shared by the transceiver is sometimes referred to as the same optical path ranging system.

FIG. 2 (or FIG. 3) is an example implementation of the ranging system 10 shown in FIG. 1. In the ranging system 10 shown in FIG. 1, the first transmitter 11 and the receiver 12 share the lens 22 and the rotating bi-prism 23a and 23b (of course, it is also possible to share only the rotating bi-prism and not to share the lens). In actual use, the first optical signal emitted by the first transmitter 11 may be reflected on a shared optical element (the lens 22, the rotating bi-prism 23a and 23b, etc.) to form a zero-level reflected signal of the first optical signal (of course, the reflection may also occur on the inner wall or the windshield of the ranging system 10). Since the optical element that generates the zero-level reflected signal is also an optical element that needs to be used during the operation of the receiver 12, the zero-level reflected signal of the first optical signal may be easily received by the receiver 12. If the object to be measured is close, the reflected signal of the object formed after the first optical signal hits the object to be measured may overlap with the zero-level reflected signal of the first optical signal, which is not easy to distinguish. That is, the zero-level reflected signal of the first optical signal and the object reflected signal may form a continuous pulse signal, which makes it difficult for the ranging system to accurately determine the reception time of the object reflected signal, resulting in inaccurate measurement.

In order to alleviate the zero-level reflection phenomenon caused by the first transmitter 11 and the receiver 12 sharing the optical elements, as shown in FIG. 2 or FIG. 3, the embodiments of the present disclosure further provide the second transmitter 13 and the receiver 14 that may not share the optical elements. In the embodiment corresponding to FIG. 2 or FIG. 3, the receiver 12 and the receiver 14 may be the same receiver, which can reduce the cost of the ranging system and simplify the implementation. Of course, in other embodiments, the receiver 12 and the receiver 14 may also be different receivers.

As described above, the second transmitter 13 and the receiver 14 may not share the optical elements. As an example, the second transmitter 13 and the receiver 14 may use different optical elements, such that the second transmitter 13 and the receiver 14 may not share the optical elements. As another example, the second transmitter 13 may not be configured with optical elements (e.g., the second transmitter 13 may be configured with only the light source and its driving circuit), such that the second transmitter 13 and the receiver 14 may not share the optical elements.

Since the second transmitter 13 and the receiver 14 are not sharing optical elements, the second optical signal emitted by the second transmitter 13 may not be reflected on the optical element used by the receiver 14. As such, the zero-level reflection phenomenon caused by the transceiver sharing the optical elements can be avoided, thereby improving the ranging accuracy of the ranging system.

As described above, for the transceiver sharing the optical elements, the overlap of the zero-level reflected signal and the object reflected signal mainly occurs when the distance between the object to be measured and the ranging system is relatively short. If the object to be measured is far away, even if the zero-level reflected signal is generated, the zero-level reflected signal and the object reflected signal may not overlap each other. As long as the two reflected signals are properly distinguished, the ranging accuracy of the ranging system is generally not affected. Therefore, in some embodiments, as an implementation method, the first transmitter 11 shown in FIG. 2 may be configured as a main transmitter to accurately measure the object to be measured at a distance, and the second transmitter 13 shown in FIG. 2 may be configured as an auxiliary transmitter, and use the characteristic of being uneasy to generate the zero-level reflected signal to accurately measure a nearby object to be measured. The implementation method will be described in detail below in conjunction with specific embodiments.

First, the divergence angle of the second optical signal (such as the divergence angle α in FIG. 2 or FIG. 3) may be set to be greater than the divergence angle of the first optical signal. A larger divergence angle of the second optical signal means that the ranging of the second optical signal can measure the object to be measured within a larger angle range. Of course, under the requirements of safety regulations, setting a larger divergence angle for the second optical signal also means that the maximum distance that the second optical signal can measure may be shorter. Therefore, the configuration method described above can allow the second transmitter 13 to be mainly used to accurately measure nearby objects.

The embodiments of the present disclosure do not specifically limit the configuration method of the divergence angle of the second optical signal. As an example, a light source with a large divergence angle may be selected such that it can directly emit the second optical signal with a lager divergence angle. This implementation method does not require additional optical elements, which can reduce the cost of the system and simplify the structure of the system. As another example, the second transmitter 13 may include a light source, a light source driving circuit, and a beam expansion element. The beam expansion element may be, for example, a projection lens and/or a diffraction element. The beam expansion element may be used to expand the optical signal emitted by the light source to form the second optical signal.

Due to the relatively large divergence angle of the second optical signal, it is already possible to measure the objects to be measured within a larger angle range, therefore, in some embodiments, the second transmitter 13 may not include an optical element for adjusting the emission angle of the second optical signal, thereby simplifying the implementation of the system and reducing costs.

In the present embodiment, the measurable area of the second transmitter 13 may be defined by the overlapping area of the field of view (the field of view may be defined by the divergence angle of the second light source) that can be measured by the light source within the second transmitter and the receiving range of the receiver 14 corresponding to the second transmitter 13.

The second transmitter 13 may not include an optical element for adjusting the emission angle of the second optical signal, therefore, the angle information of the object to be measured may not be acquired from the transmitting end. If there is a need to acquire the angle information of the object to be measured, an optical element may be arranged at the receiver 14 to adjust the receiving angle of the second optical signal. As such, since the receiver 14 can only receive the reflected signal returned by the second optical signal at a receiving angle, the angle information of the object to be measured may be derived based on this.

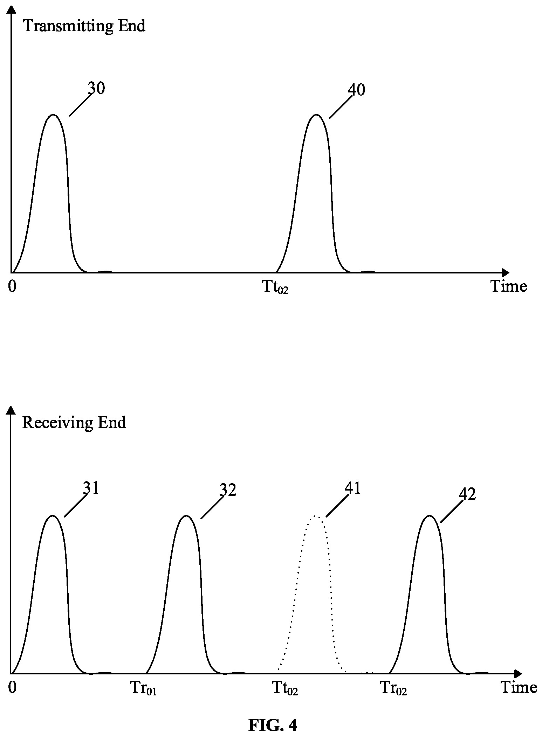

The following described the measurement process of the ranging system shown in FIG. 2 in conjunction with FIG. 4. It should be noted that the following is an example where the emission time of the first optical signal is earlier than the emission time of the second optical signal, which can be reversed. In addition, the receiver described below is a receiver shared by the first transmitter 11 and the second transmitter 13. In other embodiments, different receivers may also be configured for the first transmitter 11 and the second transmitter 13.

First, the first transmitter 11 emits a first optical signal 30 at time 0. Since the first transmitter 11 and the receiver share one or more optical elements, the shared optical element may have a reflection effect on the first optical signal 30. Therefore, nearly at the same time, the receiver may receive a zero-level reflected signal 31 of the first optical signal. When the first optical signal 30 reaches the object to be measured 90, the object to be measured 90 may reflect the first optical signal, forming an object reflected signal 32 of the first optical signal 30 to be received by the receiver at time Tr₀₁. In FIG. 4, the zero-level reflected signal 31 of the first optical signal and the object reflected signal 32 of the first optical signal may not overlap, which indicates that the distance between the object to be measured 90 and the ranging system is relatively far, and the zero-level reflected signal 31 of the first optical signal 30 does not affect the measurement accuracy of the measurement process based on the first optical signal 30. If the distance between the object to be measured 90 and the ranging system is relatively short, the zero-level reflected signal 31 of the first optical signal and the object reflected signal 32 of the first optical signal may overlap, thereby reducing the measurement accuracy of the measurement process based on the first optical signal 30.

At time Tt₀₂, the second transmitter 13 emits a second optical signal 40. The second optical signal 40 may be emitted after the measurement process based on the first optical signal 30 ends to avoid interference with the reception process of the reflected signaled of the first optical signal 30.

Since the second optical signal 40 may not share the optical elements with the receiver, the second optical signal 40 may not generate a zero-level reflected signal 41 (the zero-level reflected signal does not exist, therefore, it is indicated by a broken line in FIG. 4) due to the shared optical element. After the second optical signal 40 reaches the object to be measured 90, the object to be measured 90 may reflect the second optical signal 40, forming an object reflected signal 42 of the second optical signal 40 to be received by the receiver at time Tr₀₂.

Compared with the first optical signal 30, the second optical signal 40 is less likely to generate the zero-level reflection phenomenon, therefore, as a possible implementation method, if the receiver receives the object reflected signal 42 of the second optical signal 40, the distance of the object to be measured may be measured based on the object reflected signal 42 alone. Alternatively, as another possible implementation method, if the receiver receives the object reflected signal 42 of the second optical signal 40, and the signal quality of the object reflected signal 42 of the second optical signal 40 meets certain predetermined conditions (e.g., the signal intensity of the object reflected signal 42 of the second optical signal 40 is greater than a predetermined threshold), the distance of the object to be measured may be measured based on the object reflected signal 42 of the second optical signal 40 alone.

Of course, in other implementation methods, the distance of the object to be measured 90 may be measured based on the object reflected signal 32 of the first optical signal 30 and the object reflected signal 42 of the second optical signal 40, such as the weighted sum of the measurement results of the two optical signals.

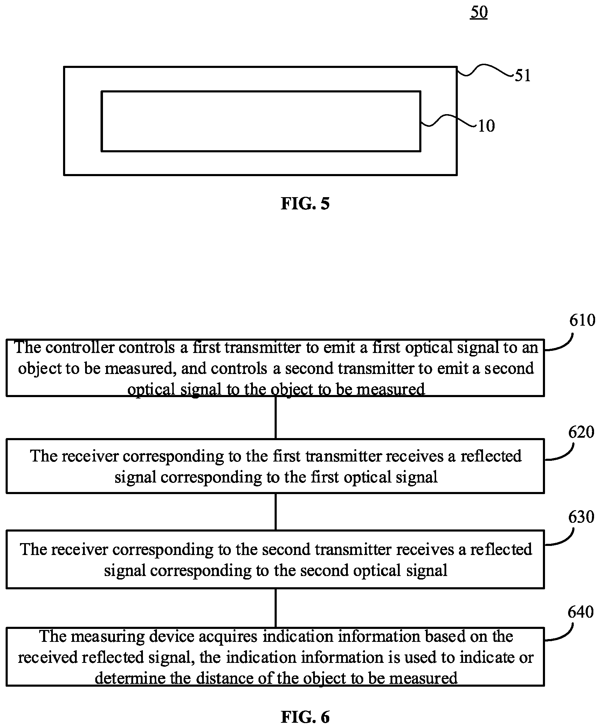

As shown in FIG. 5, an embodiment of the present disclosure further provides an automated equipment 50. The automated equipment 50 may be, for example, a robot, a UAV, an unmanned vehicle, or an unmanned ship. The automated equipment 50 may include a housing 51 and the ranging system 10 described in any of the above embodiments. The ranging system 10 may be disposed inside the housing 51.

The device embodiments of the present disclosure are described in detail above with reference to FIGS. 1 to 5, and the method embodiments of the present disclosure will be described in detail below with reference to FIG. 6. It can be understood that the descriptions of the method embodiments correspond to the descriptions of the device embodiments. Therefore, for the parts that are not described in detail, reference may be made to the device embodiments above.

FIG. 6 is a flowchart of a ranging method according to an embodiment of the present disclosure. The ranging method of FIG. 6 includes steps 610-640.

In step 610, the controller controls a first transmitter to emit a first optical signal to an object to be measured, and controls a second transmitter to emit a second optical signal to the object to be measured.

In step 620, the receiver corresponding to the first transmitter receives a reflected signal corresponding to the first optical signal.

In step 630, the receiver corresponding to the second transmitter receives the reflected signal corresponding to the second optical signal.

In step 640, the measuring device acquires indication information based on the received reflected signal corresponding to the first optical signal and/or the reflected signal corresponding to the second optical signal, the indication information is used to indicate or determine the distance of the object to be measured.

In some embodiments, the first transmitter and the receiver corresponding to the first transmitter may share some or all of the optical elements, and the second transmitter and the receiver corresponding to the second transmitter may not share the optical elements.

In some embodiments, the divergence angle of the second optical signal may be greater than the divergence angle of the first optical signal.

In some embodiments, the second transmitter may include a light source, a light source driving circuit, and a beam expansion element, and the beam expansion element may be used to expand the optical signal emitted by the light source to form the second optical signal.

In some embodiments, the second transmitter may include a light source, a light source driving circuit, and may not include an optical element for adjusting the emission angle of the second optical signal.

In some embodiments, the measuring device acquiring the indication information based on the received reflected signal corresponding to the first optical signal and/or the reflected signal corresponding to the second optical signal may include the measuring device acquiring the indication information only based on the reflected signal corresponding to the second optical signal when the reflected signal corresponding to the second optical signal is received.

In some embodiments, the first transmitter and the receiver corresponding to the first transmitter may share a scanning mechanism. The scanning mechanism can be used to adjust the emission angle of the first optical signal and the receiving angle of the reflected signal corresponding to the first optical signal. The scanning mechanism may be, for example, a rotating bi-prism, or other types of optical element such as MEMS that can adjust the optical path.

In some embodiments, the receiver corresponding to the first transmitter and the receiver corresponding to the second transmitter may be the same receiver. The controller controlling the first transmitter to emit the first optical signal to the object to be measured, and controlling the second transmitter to emit the second optical signal to the object to be measured may include the controller controlling the first transmitter to emit the first optical signal at a first time, and controlling the second transmitter to emit the second optical signal at a second time. The first time and the second time may be arranged such that the reception time of the reflected corresponding to the first optical signal and the reception time of the reflected corresponding to the second optical signal may not overlap with each other.

In some embodiments, the first time may be earlier than the second time, and the time interval between the first time and the second may not be less than 2L₁/c ; or, the first time may be later than the second time, and the time interval between the first time and the second may not be less than 2L₂/c, where L₁ may be the maximum distance that the first optical signal can measure, L₂ may be the maximum distance that the second optical signal can measure, and c may be the speed of light.

In some embodiments, the receiver corresponding to the first transmitter and the receiver corresponding to the second transmitter may be different receivers.

In some embodiments, the first optical signal and/or the second optical signal may be laser signals.

All or some embodiments of the present disclosure may be implemented in software, hardware, firmware, or combinations thereof. When being implemented in software, all or some embodiments of the present disclosure may be implemented in form of a computer program product. The computer program product includes one or more computer instructions. When being loaded and executed by a computer, the computer program instructions perform all or some steps or functions according to the flowcharts in the embodiments of the present disclosure. The computer may be a general-purpose computer, a special-purpose computer, a computer network, or other programmable devices. The computer program instructions may be stored in a computer readable storage medium or transferred from one computer readable storage medium to anther computer readable storage medium. For example, the computer program instructions may be transferred from one website, one computer, one server, or one data center to another web site, another computer, another server, or another data center through wired (e.g., coaxial cable, optical fiber, digital subscriber line) or wireless (e.g., infrared, wireless, microwave, etc.) communication. The computer readable storage medium may be any suitable medium accessible by a computer or a data storage device including one or more suitable media, such as a server or a data center. The suitable medium may be a magnetic medium (e.g., a floppy disk, a hard disk, a magnetic tape), an optical medium (e.g., a DVD disk), or a semiconductor medium (e.g., an SSD drive).

Those of ordinary skill in the art may appreciate that various units or steps described in the embodiments of the present disclosure may be implemented by electronic hardware or a combination of computer software and electronic hardware. Whether the functions are performed by hardware or software depends on specific applications and design constraints of the technical solution. Those skilled in the art may use different methods to implement the described functions for each particular application. However, such implementation should be included within the scope of the present disclosure.

In the embodiments of the present disclosure, the disclosed system, device, and method may be implemented in other manners. For example, the device embodiments are merely illustrative. For example, the division of the units is only a logic function division. Other divisions may be possible in actual implementation. For example, a plurality of units or components may be combined or integrated to a different system. Some features may be omitted or may not be executed. Further, mutual coupling or direct coupling or communication connection as shown in the drawings or discussed in the description may be indirect coupling or communication connection through certain interfaces, devices, or units, and may be electrical, mechanical, or in other forms.

Units described as separate parts may or may not be physically separated. Components shown as units may or may not be physical units, that is, may be located in one place, or may be distributed to a plurality of network units. Some or all units may be selected according to actual requirements to achieve the objectives of the solution of the present disclosure.

In addition, various functional blocks of the embodiments of the present disclosure may be integrated in one processing module or circuit, or may be physically separate modules or circuits, or may have two or more functional blocks integrated in one module or circuit. The integrated module or circuit may be implemented in hardware or may be implemented in software functional modules. When being implemented in software functional modules and sold or used as an independent product, the integrated module may be stored in the computer readable storage medium.

The foregoing descriptions are merely some implementation manners of the present disclosure, but the scope of the present disclosure is not limited thereto. Without departing from the spirit and principles of the present disclosure, any modifications, equivalent substitutions, and improvements, etc. shall fall within the scope of the present disclosure. Thus, the scope of invention should be determined by the appended claims.

## Claims

1. A ranging system, comprising:
a first transmitter configured to emit a first optical signal to an object to be measured;
a receiver corresponding to the first transmitter, configured to receive a reflected signal corresponding to the first optical signal;
a second transmitter configured to emit a second optical signal to the object to be measured;
a receiver corresponding to the second transmitter, configured to receive a reflected signal corresponding to the second optical signal;
a controller configured to control the first transmitter to emit the first optical signal and control the second transmitter to emit the second optical signal; and
a measuring device configured to acquire indication information based on the received reflected signal corresponding to the first optical signal and/or the reflected signal corresponding to the second optical signal, the indication information is used to indicate or determine a distance of the object to be measured.

2. The ranging system of claim 1, wherein:
the first transmitter and the receiver corresponding to the first transmitter share some or all of optical elements, and the second transmitter and the receiver corresponding to the second transmitter do not share the optical elements.

3. The ranging system of claim 1 or 2, wherein:
a divergence angle of the second optical signal is greater than a divergence angle of the first optical signal.

4. The ranging system of any one of claims 1-3, wherein:
the second transmitter includes a light source, a light source driving circuit, and a beam expansion element, the beam expansion element is configured to expand the optical signal emitted by the light source to form the second optical signal.

5. The ranging system of any one of claims 1-4, wherein:
the second transmitter includes the light source and the light source driving circuit, and does not include an optical element for adjusting an emission angle of the second optical signal.

6. The ranging system of any one of claims 1-5, wherein:
the measuring device is configured to acquire the indication information only based on the reflected signal corresponding to the second optical signal in response to receiving the reflected signal corresponding to the second optical signal.

7. The ranging system of any one of claims 1-6, wherein:
the first transmitter and the receiver corresponding to the first transmitter share a scanning mechanism, the scanning mechanism is configured to adjust an emission angle of the first optical signal and a receiving angle of the reflected signal corresponding to the first optical signal.

8. The ranging system of any one of claims 1-7, wherein:
the receiver corresponding to the first transmitter and the receiver corresponding to the second transmitter are the same receiver; and
the controller is configured to control the first transmitter to emit the first optical signal at a first time, and control the second transmitter to emit the second optical signal at a second time, the first time and the second time are set such that a reception time of the reflected signal corresponding to the first optical signal and a reception time of the reflected signal corresponding to the second optical signal do not overlap with each other.

9. The ranging system of claim 8, wherein:
the first time is earlier than the second time, and a time interval between the first time and the second time is not less than 2L₁/c; or,
the first time is later than the second time, and the time interval between the first time and the second time is not less than 2L₂/c; where
L₁ is a maximum distance that the first optical signal can measure, L₂ is a maximum distance that the second optical signal can measure, and c is the speed of light.

10. The ranging system of any one of claims 1-7, wherein:
the receiver corresponding to the first transmitter and the receiver corresponding to the second transmitter are different receivers.

11. The ranging system of any one of claims 1-10, wherein:
the first optical signal and/or the second optical signal are laser signals.

12. An automated equipment, comprising:
a housing; and
the ranging system based on any one of claims 1-11 disposed in the housing.

13. The automated equipment of claim 12, wherein:
the automated equipment is a robot, an unmanned aerial vehicle (UAV), or an unmanned boat.

14. A ranging method, comprising:
a controller controlling a first transmitter to emit a first optical signal to an object to be measured, and controlling a second transmitter to emit a second optical signal to the object to be measured;
a receiver corresponding to the first transmitter receiving a reflected signal corresponding to the first optical signal;
a receiver corresponding to the second transmitter receiving a reflected signal corresponding to the second optical signal; and
a measuring device acquiring indication information based on the received reflected signal corresponding to the first optical signal and/or the reflected signal corresponding to the second optical signal, the indication information is used to indicate or determine a distance of the object to be measured.

15. The ranging method of claim 14, wherein:
the first transmitter and the receiver corresponding to the first transmitter share some or all of optical elements, and the second transmitter and the receiver corresponding to the second transmitter do not share the optical elements.

16. The ranging method of claim 14 or 15, wherein:
a divergence angle of the second optical signal is greater than a divergence angle of the first optical signal.

17. The ranging method of any one of claims 14-16, wherein:
the second transmitter includes a light source, a light source driving circuit, and a beam expansion element, the beam expansion element is configured to expand the optical signal emitted by the light source to form the second optical signal.

18. The ranging method of any one of claims 14-17, wherein:
the second transmitter includes the light source and the light source driving circuit, and does not include an optical element for adjusting an emission angle of the second optical signal.

19. The ranging method of any one of claims 14-18, wherein the measuring device acquiring the indication information based on the reflected signal corresponding to the second optical signal includes:
the measuring device only acquiring the indication information based on the reflected signal corresponding to the second optical signal the in response to receiving the reflected signal corresponding to the second optical signal.

20. The ranging method of any one of claims 14-19, wherein:
the first transmitter and the receiver corresponding to the first transmitter share a scanning mechanism, the scanning mechanism is configured to adjust an emission angle of the first optical signal and a receiving angle of the reflected signal corresponding to the first optical signal.

21. The ranging method of any one of claims 14-20, wherein:
the receiver corresponding to the first transmitter and the receiver corresponding to the second transmitter are the same receiver; and
the controller is configured to control the first transmitter to emit the first optical signal at a first time, and control the second transmitter to emit the second optical signal at a second time, the first time and the second time are set such that a reception time of the reflected signal corresponding to the first optical signal and a reception time of the reflected signal corresponding to the second optical signal do not overlap with each other.

22. The ranging method of claim 21, wherein:
the first time is earlier than the second time, and a time interval between the first time and the second time is not less than 2L₁/c; or,
the first time is later than the second time, and the time interval between the first time and the second time is not less than 2L₂/c; where
L₁ is a maximum distance that the first optical signal can measure, L₂ is a maximum distance that the second optical signal can measure, and c is the speed of light.

23. The ranging method of any one of claims 14-20, wherein:
the receiver corresponding to the first transmitter and the receiver corresponding to the second transmitter are different receivers.

24. The ranging method of any one of claims 14-23, wherein:
the first optical signal and/or the second optical signal are laser signals.
